# EUROPÄISCHE PATENTSCHRIFT

(11) **EP 3 563 209 B1**
(45) Veröffentlichungstag und Bekanntmachung des Hinweises auf die Patenterteilung: **01.04.2020**
(21) Anmeldenummer: 18738283.3
(22) Anmeldetag: 05.07.2018
(51) Int. Cl.: G06C 1/00, G06F 21/57, G06F 21/60

(54) **GESAMTVORRICHTUNG MIT EINER AUTHENTIFIZIERUNGSANORDNUNG UND VERFAHREN ZUR AUTHENTIFIZIERUNG**
WHOLE APPARATUS HAVING AN AUTHENTICATION ARRANGEMENT, AND METHOD FOR AUTHENTICATION
DISPOSITIF GLOBAL COMPRENANT UN DISPOSITIF D'AUTHENTIFICATION ET PROCÉDÉ D'AUTHENTIFICATION

(30) Priorität: 28.07.2017 DE 102017213010
(43) Veröffentlichungstag der Anmeldung: 06.11.2019
(73) Patentinhaber: Audi AG, 85045 Ingolstadt (DE)
(72) Erfinder: AHN, Changsup, 85057 Ingolstadt (DE); ZAWADZKI, Kamil, 81827 München (DE); KLEIN, Markus, 85104 Pförring (DE); GRUBER, Hans-Georg, 85049 Ingolstadt (DE)
(86) Internationale Anmeldenummer: PCT/EP2018/068170
(87) Internationale Veröffentlichungsnummer: WO 2019/020335

(56) Entgegenhaltungen:
- WO-A1-2016/152556
- DE-A1-102009 027 676

## Beschreibung

Die Erfindung betrifft eine Gesamtvorrichtung mit einer Authentifizierungsanordnung für eine ein Kommunikationsprotokoll nutzende Kommunikationsverbindung zwischen zwei Datenverarbeitungseinrichtungen der Gesamtvorrichtung, wobei die Datenverarbeitungseinrichtungen jeweils eine Schnittstelleneinheit für die Kommunikationsverbindung und eine Recheneinheit, insbesondere eine CPU und/oder eine GPU und/oder ein FPGA und/oder ein ASIC, aufweisen. Daneben betrifft die Erfindung ein Verfahren zur Authentifizierung.

Moderne Gesamtvorrichtungen mit Datenverarbeitungssystemen, beispielsweise Kraftfahrzeuge, werden aufgrund der Vielzahl zu erfüllender Aufgaben und/oder dem Fortschreiten der Möglichkeiten in der Datenverarbeitung zunehmend komplexer. Soll beispielsweise ein Kraftfahrzeug zum vollständig automatischen, also autonomen Betrieb ausgebildet werden, werden Datenverarbeitungssysteme mit hoher Rechenleistung benötigt, um die Umgebung des Kraftfahrzeugs sicher zu verarbeiten und eine sichere Fahrtplanung vornehmen zu können. Zu solchen autonomen Betriebsmöglichkeiten in Kraftfahrzeugen als Gesamtvorrichtungen kommen dabei noch zunehmende Kommunikationsmöglichkeiten im Bereich der Informationstechnologie, beispielsweise Verbindungen zu Clouds, zur Infrastruktur und dergleichen. Auch das Kraftfahrzeug als Service-Plattform tritt zunehmend in das Zentrum der Aufmerksamkeit.

Datenverarbeitungssysteme von Gesamtvorrichtungen, beispielsweise Kraftfahrzeugen, sind dabei üblicherweise aus einer Mehrzahl an Datenverarbeitungseinrichtungen aufgebaut, die selbst eine große Leistungsfähigkeit aufweisen können, wobei jedoch gilt, dass auch eine schnelle und unkomplizierte Datenübertragung zwischen den Datenverarbeitungseinrichtungen über entsprechende Kommunikationsverbindungen sichergestellt werden muss. Als moderne, schnelle Kommunikationstechnik bietet sich hierbei beispielsweise der Kommunikationsstandard "PCI Express" (oft auch PCIe) an. Dabei handelt es sich um einen Punkt-zu-Punkt-Kommunikationsstandard, welcher allerdings durch Zwischenschalten von Brückeneinrichtungen, insbesondere Switches, Hubs, Multiplexer/Demultiplexer oder dergleichen, erweitert werden kann. Der Vorteil von PCI Express ist insbesondere die Hochgeschwindigkeitskommunikation, "DMA by Design" und die Tatsache, dass viele kompatible Einrichtungen bereits auf dem Markt erhältlich sind.

Bei einer Datenverarbeitungseinrichtung wird die Kommunikationsverbindung üblicherweise über entsprechende Schnittstelleneinheiten aufgebaut, beispielsweise einen PCIe-Mikrochip. Brückeneinrichtungen (Switches, Hubs, Multiplexer, Dimultiplexer) können als einzelner Mikrochip (System on a Chip" - SoC) oder auch als Mehrchip-Einrichtung ausgebildet sein. Die eigentlichen Kommunikationspartner (Datenverarbeitungseinrichtungen) werden üblicherweise als "Endpoints" bezeichnet und können ein Betriebssystem und/oder Treiber aufweisen, wobei die Handhabung der Interrupts und Lese-/Schreiboperationen durch den Treiber erfolgen können.

Problematisch bei Gesamtvorrichtungen wie Kraftfahrzeugen, die sich von Personalcomputern deutlich unterscheiden, ist hierbei, dass deren Datenverarbeitungssysteme auf einem modularen Konzept beruhen, wobei die Kommunikationsverbindungen physikalisch für Angriffe erreichbar sind. Das bedeutet wiederum, dass auch nicht autorisierte Datenverarbeitungseinrichtungen, beispielsweise Steuergeräte, auf die Kommunikationsverbindungen zugreifen können und ihre eigenen Nutzdaten einbringen können, die gegebenenfalls nicht die Anforderungen für automotive Qualität und/oder Sicherheit erfüllen, so dass ein kompromittierter und/oder hinzugefügter "Endpoint" auch ein Sicherheitsproblem für das restliche Datenverarbeitungssystem darstellen kann. Dies gilt insbesondere bei Kommunikationsstandards, die den direkten Zugriff auf Komponenten von Kommunikationspartnern erlauben, beispielsweise auf Speichermittel und dergleichen.

Der Erfindung liegt daher die Aufgabe zugrunde, eine Möglichkeit zur Erhöhung der Sicherheit in Datenverarbeitungssystemen von Gesamtvorrichtungen, die mit modernen, schnellen, weniger sicheren Kommunikationsstandards arbeiten, anzugeben und insbesondere eine Authentifizierung der Datenverarbeitungseinrichtungen untereinander zu erlauben.

Dokument WO2016/152556A1 offenbart z.B., eine Verwaltungsvorrichtung in einem Fahrzeug die eine E-Sim umfasst und Sicherheitsfunktionen die für Kommunikation mit anderen Entitäten innerhalb oder außerhalb des Fahrzeugs ausführt und wo ein Sicherheitsschlüssel welches mit der E-SIM geliefert wird für die Kommunikation benutzt wird.

Dokument DE102009027676A1 offenbart die Herstellung einer Verbindung mit einer Ende-zu-Ende-Verschlüsselung zwischen einem Sicherheitsmodul und einer Verwaltungsvorrichtung in einem Fahrzeug. Informationen werden vom Sicherheitsmodul an die Verwaltungsvorrichtung unter der Annahme übertragen, dass die Authentifizierung durchgeführt wird. Diese Informationen werden dann von der Verwaltungsvorrichtung unter Verwendung eines Zertifikats einer öffentlichen Schlüsselinfrastruktur signiert.

Zur Lösung dieser Aufgabe ist bei einer Gesamtvorrichtung der eingangs genannten Art erfindungsgemäß vorgesehen, dass die Schnittstelleneinheiten jeweils ein wenigstens teilweise durch Hardware realisiertes, kryptografisches Verschlüsselungs-/Entschlüsselungsmittel zur Verschlüsselung wenigstens eines Teils der über die Kommunikationsverbindung zu übertragenden Nutzdaten als Teil der Authentifizierungsanordnung aufweisen, welches in einer insbesondere nicht anwendungsorientierten Kommunikationsschicht des Kommunikationsprotokolls auf die für die physikalische Nutzdatenübertragung vorbereiteten Nutzdaten bzw. die physikalisch empfangenen Nutzdaten angewendet wird, wobei jede Datenverarbeitungseinrichtung eine als eigene Hardware, auf die die Recheneinheit nicht zugreifen kann, und/oder logisch isoliert von der Recheneinheit umgesetzte, eine Trusted Execution Environment realisierende Sicherheitseinheit der Authentifizierungsanordnung mit jeweils wenigstens einer hardwarecodierten Schlüsselinformation aufweist, in deren Abhängigkeit die Nutzdaten durch das Verschlüsselungs-/Entschlüsselungsmittel verschlüsselt werden.

Die Erfindung schlägt mithin eine als Hardware realisierte und somit gegenüber Manipulationen weniger anfällige Authentifizierungsanordnung vor, die über die Möglichkeit zur sicheren Kommunikation über die Kommunikationsverbindung wenigstens implizit, bevorzug aber in einem Authentifizierungsvorgang, eine gegenseitige Authentifizierung der Datenverarbeitungseinrichtungen ermöglicht. Grundstock hierfür ist die in der Hardware der Sicherheitseinheit, auf die die Recheneinheit keinen Zugriff hat, fest codierte Schlüsselinformation, die für jeweils wenigstens ein Paar gegeneinander zu authentifizierender Datenverarbeitungseinrichtungen abgestimmt ist, wobei die Verschlüsselungsinformation für ein Paar von kommunizierenden Datenverarbeitungseinrichtungen auf symmetrischer Verschlüsselung, aber auch auf asymmetrischer Verschlüsselung beruhen kann. Im Fall symmetrischer Verschlüsselung umfasst die Verschlüsselungsinformation wenigstens einen gleichen Basisschlüssel, insbesondere für alle Datenverarbeitungseinrichtungen. Im Fall der asymmetrischen Verschlüsselung enthält jede Schlüsselinformation wenigstens den eigenen privaten Schlüssel und die öffentlichen Schlüssel aller vorgesehenen, zu authentifizierenden Kommunikationspartner.

Dabei kann die Authentifizierung, wie angedeutet, im Wesentlichen implizit durch das hier beschriebene Verschlüsselungskonzept erfolgen, wobei bevorzugt ein expliziter Authentifizierungsvorgang eingesetzt werden kann, insbesondere zu Beginn jeder Kommunikationssitzung im Rahmen des oder zusätzlich zum Aushandeln eines Sessionschlüssels oder gänzlich ohne Schlüsselaushandlung. Beliebige, grundsätzlich bekannte Authenfifizierungsvorgänge können eingesetzt werden. Zweckmäßigerweise erfolgt zu Beginn einer Kommunikationssitzung zunächst eine Authentifizierung, wonach eine Aushandlung eines Sessionschlüssels bei erfolgreicher Authentifizierung stattfindent. Nicht authentifizierte Datenverarbeitungseinrichtungen, beispielsweise entsprechend kompromittierte und/oder ersetzte Datenverarbeitungseinrichtungen, werden "nicht verstanden", können sich nicht authentifizieren oder durch Abwesenheit jeglicher Verschlüsselung entdeckt. Die vorliegende Erfindung sorgt mithin dafür, dass nur zugelassene (also passende/abgestimmte Schlüsselinformationen aufweisende) Datenverarbeitungseinrichtungen wie vorgesehen kommunizieren können.

Die Sicherheitseinheit realisiert eine Trusted Execution Environment (TEE, vertrauenswürdige Laufzeitumgebung). Die Sicherheitseinheit umfasst neben den hardwarecodierten Schlüsselinformationen auch ein durch Hardware realisiertes und/oder isoliertes Betriebssystem zur Schlüsselverwaltung und gegebenenfalls Durchführung eines Authentifizierungsvorgangs und/oder Schlüsselaushandlung, wenn ein Sessionschlüssel für die aktuelle Kommunikationssitzung ausgehandelt werden soll, worauf im Folgenden noch näher eingegangen werden wird.

Es kann also gesagt werden, dass die vorliegende Erfindung als neue Komponenten einer Authentifizierungsanordnung die Sicherheitseinheit als Trusted Execution Environment, die die Schlüsselinformationen beinhaltet und verwaltet, und ein möglichst nahe an den physikalisch zu übertragenden Nutzdaten liegendes kryptografisches Verschlüsselungs-/Entschlüsselungsmittel, insbesondere in einer Transportschicht und/oder Kommunikationsschicht, bereitstellt. Die Sicherheitseinheit stellt mit der Trusted Execution Environment also einen Ausführungskontext bereit, der von dem normalen Betriebssystem der Datenverarbeitungseinrichtung isoliert ist. Das Schlüsselmanagement und das sichere Speichern der Schlüsselinformation soll genauso in der Sicherheitseinheit stattfinden wie gegebenenfalls vorgesehene sichere Berechnungen, beispielsweise Schlüsselgenerierung, Authentifizierungsvorgang und Schlüsselverhandlung (Key Agreement).

Damit ergibt sich zusammenfassend eine starke Authentifizierung jeder Datenverarbeitungseinrichtung der Gesamtvorrichtung, insbesondere des Kraftfahrzeugs, wobei die Möglichkeit besteht, das Datenverarbeitungssystem des Kraftfahrzeugs mit autorisierten Partnern zu erweitern. Beispielsweise können geeignete Schlüsselinformationen, die hardwarezucodieren sind, an entsprechende Kooperationspartner weitergegeben werden. Der Begriff des "Hardwarecodierens" ist dabei so zu verstehen, dass die Schlüssel in die Sicherheitseinheit geschrieben werden, ggf. in Form einer Schaltung, und danach mit bekannten Mitteln unveränderbar gestaltet wird.

Unbekannte Datenverarbeitungseinrichtungen dritter Parteien können vermieden werden, da die sichere Kommunikation unmöglich ist und/oder das Authentifizieren/das Aushandeln von Sessionschlüsseln scheitert. Durch die Auslagerung der Authentifizierung in Hardwarekomponenten wird die Qualitätsüberprüfung von Softwarekomponenten der Datenverarbeitungseinrichtungen vereinfacht, nachdem die Authentifizierung auf einem Hardware-Niveau stattfindet. Die Erfindung erlaubt das Verhindern physikalischer Umbaumaßnahmen und Angriffe, was insbesondere für Gesamtvorrichtungen wie Kraftfahrzeuge vorteilhaft ist, da hier die Kommunikationsverbindungen physikalisch relativ einfach zugänglich sind. Die verschlüsselten Nutzdaten können dann von einem externen Analysemittel nicht verstanden werden. Das beschriebene Konzept ist insgesamt als anwendungstransparent zu bezeichnen, nachdem alle Schutzmechanismen in Hardware und ggf. Low-Level-Software implementiert werden.

Es sei noch angemerkt, dass zur eigentlichen Hardwarecodierung der Schlüsselinformation verschiedene Möglichkeiten existieren. Beispielsweise ist es denkbar, die Schlüsselinformation bereits beim Hersteller der Sicherheitseinheit, welche beispielsweise als eigener Mikrochip ausgebildet sein kann, festzulegen und in die Sicherheitseinheit hardwarecodiert einzubringen. Jedoch kann auch ein Hersteller der Gesamtvorrichtung an sich, beispielsweise bei einem Kraftfahrzeug am Bandende, die Schlüsselinformation hardwarecodieren. Dabei kann vorgesehen sein, dass ein vorläufiger Generalschlüssel innerhalb der Sicherheitseinheit vorliegt, der genutzt werden kann, um die eigene Schlüsselinformation zu ergänzen und hardwarezucodieren und schließlich den noch nicht geschlossenen Mikrochip der Sicherheitseinheit abzuschließen ("fusing"). Dies gilt sowohl für symmetrische Schlüsselinformationen, mithin insbesondere gemeinsame Basisschlüssel, als auch für asymmetrische Schlüsselinformationen.

Mit besonderem Vorteil kann vorgesehen sein, dass die Kommunikationsschicht eine Transportschicht und/oder eine Transaktionsschicht ist und/oder das Kommunikationsprotokoll paketbasiert, insbesondere PCI Express, ist. Eine besonders vorteilhafte Ausgestaltung der vorliegenden Erfindung ergibt sich mithin, wenn als Kommunikationsprotokoll (Kommunikationsstandard) PCI Express (PCIe) gewählt wird, wobei dann das Verschlüsselungs-/Entschlüsselungsmittel bevorzugt einer Transaktionsschicht zugeordnet ist, mithin auf die für den physikalischen Transport vorbereiteten, entsprechend formatierten Nutzdaten, konkret TLPs (Transaction Layer Packages), angewendet wird.

In einer zweckmäßigen Weiterbildung der Erfindung kann vorgesehen sein, dass bei einem paketbasierten Kommunikationsprotokoll nur ein, insbesondere dynamisch oder nutzerseitig einstellbarer, Anteil der zu versendenden Nutzdatenpakete verschlüsselt wird, wobei der Verschlüsselungszustand in einer Informationseinheit, insbesondere einem Verschlüsselungsbit, des Headers des jeweiligen Nutzdatenpakets angezeigt wird. Um Verschlüsselungs- und Entschlüsselungsaufwand zu sparen, ist es mithin denkbar, nur eine teilweise Verschlüsselung vorzunehmen, wofür bevorzugt ein entsprechendes Verschlüsselungsbit innerhalb des Headers der Nutzdatenpakete entsprechend gesetzt wird, wenn eine Verschlüsselung vorliegt. Allgemein kann dabei auch von einem Verschlüsselungsindikator geredet werden. Die Rate der Verschlüsselung kann dabei durch einen Benutzer gewählt werden, beispielsweise hardwarecodiert von einem Hersteller der Gesamtvorrichtung vorgegeben werden, aber auch dynamisch anpassbar sein, so dass beispielsweise vorgesehen sein, dass die Rate der verschlüsselten Nutzdatenpakete in Abhängigkeit einer gewollten Datenübertragungsgeschwindigkeit für die Nutzdaten gewählt wird. Auf diese Weise kann ein Gleichgewicht zwischen der Sicherheit, die die Verschlüsselung bietet, und dem Einsparen an Aufwand für hohe Datenübertragungsgeschwindigkeiten geschaffen werden.

In einer besonders vorteilhaften Ausgestaltung kann vorgesehen sein, dass die Sicherheitseinheit wenigstens einen Absicherungsmechanismus gegen ein Aus- oder Ablesen der Schlüsselinformation aufweist. Es wurden bereits beispielsweise spezielle Mikrochips vorgeschlagen, bei denen bei einem physikalischen Eingriff an dem Mikrochip dennoch ein eingespeicherter Schaltkreis/eine eingespeicherte Schlüsselinformation unlesbar wird. Beispielsweise kann die Sicherheitseinheit als ein sicherer Kryptoprozessor ("secure cryptoprocessor") realisiert werden, bei dem wenigstens eine physikalische Sicherheitsmaßnahme als Absicherungsmechanismus vorgesehen ist, wie dies beispielsweise bei Smartcards bekannt ist. Als Absicherungsmechanismen sind auch Ausgestaltungen denkbar, in denen bei einer Zerstörung der physikalischen Integrität der Sicherheitseinheit eine automatische Zerstörung der gespeicherten Schlüsselinformation erfolgt. Absicherungsmechanismen können auch Abschirmschichten umfassen, die das Auslesen interner Signale verhindern und dergleichen.

Grundsätzlich ist es im Rahmen der vorliegenden Erfindung denkbar, die hardwarecodierte Schlüsselinformation unmittelbar zu nutzen, um die Entschlüsselung/Verschlüsselung der Nutzdaten vorzunehmen, so dass ein Aushandeln eines für eine Kommunikationssitzung zu verwendenden Sessionschlüssels (Session Key) nicht notwendig ist. Jedoch hat es sich, insbesondere im Hinblick auf die Authentifizierung, als zweckmäßig erwiesen, wenn die Authentifizierungsanordnung zum Aushandeln eines für eine Kommunikationssitzung zu verwendenden Sessionschlüssels in Abhängigkeit der Schlüsselinformation ausgebildet ist, insbesondere nach einer gegenseitigen Authentifizierung im Rahmen eines die Schlüsselinformation nutzenden Authentifizierungsvorgangs. Dabei wird es üblicherweise so sein, dass die Sicherheitseinheiten über die Kommunikationsverbindung kommunizieren, um sich auf einen Sessionschlüssel zu einigen und ggf. einen Authentifizierungsvorgang auch getrennt. Die Schlüsselinformation dient dabei als eine "shared information", also geteilte Information, die der Authentifizierung und/oder den Verhandlungen und/oder dem Generieren des Sessionschlüssels zugrunde zu legen ist, um die Authentifizierung durch die Authentifizierungsanordnungen zu ermöglichen. Dabei sind verschiedene Möglichkeiten zum Aushandeln eines Schlüssels denkbar, insbesondere auch asymmetrische Aushandlungsverfahren, beispielsweise Diffie-Hellman-Verfahren. Es ist auch denkbar, dass das Aushandeln des Sessionschlüssels als Authentifizierungsvorgang verstanden werden kann, wenn keine explizite Authentifizierung vor- oder zwischengeschaltet ist. Anders ausgedrückt liefert dann der Authentifizierungsvorgang den "Sessionschlüssel".

Eine andere vorteilhafte Weiterbildung der vorliegenden Erfindung sieht vor, dass bei einer symmetrischen Schlüsselinformation, die für jede Datenverarbeitungseinrichtung wenigstens einen gleichen Basisschlüssel umfasst, mehrere Basisschlüssel vorgesehen sind und/oder die Sicherheitseinheit zur Ableitung verschiedener Subschlüssel aus dem Basisschlüssel ausgebildet ist. Gründe dafür, unterschiedliche Basisschlüssel vorzusehen, existieren in größerer Zahl. So kann beispielsweise über die Basisschlüssel die Authentifizierung nach weiteren Kriterien angepasst werden, beispielsweise für unterschiedliche Modelle der Gesamtvorrichtung jeweils ein unterschiedlicher Schlüssel bereitgestellt werden, um auch hinsichtlich der Authentifizierung eine Unterscheidung zu gestatten. Allgemein kann gesagt werden, dass ein zu verwendender Schlüssel anhand einer Eigenschaft der Gesamtvorrichtung und/oder eines den Einsatz der Gesamtvorrichtung beschreibenden Einsatzparameters wählbar ist. Neben dem genannten Beispiel der unterschiedlichen Modelle der Gesamtvorrichtung ist es beispielsweise auch denkbar, staatenspezifische und/oder regionenspezifische Basisschlüssel vorzusehen, über die unterschiedlichen lokalen Gegebenheiten Rechnung getragen werden kann und/oder ein lokal unterschiedliches Verhalten herbeigeführt werden kann. Denkbar ist es ferner, den Schlüsseln eine bestimmte Haltbarkeit und/oder einen gewissen Zeitraum zuzuordnen, so dass beispielsweise Basisschlüssel für bestimmte Gültigkeitszeiträume vorhanden sind. Besonders vorteilhaft ist es hierbei, wenn die mehreren Basisschlüssel als Schlüsselbaum auf einem nicht eingespeicherten und/oder niemals unmittelbar verwendeten, geheimen Rootschlüssel basieren. Auf diese Weise lassen sich die mehreren Basisschlüssel also aus einem gemeinsamen, geheimen und somit speziell absicherbaren Rootschlüssel ableiten, der selbst außerhalb der Sicherheitseinheit nicht zum Einsatz kommen muss. Mithin kann vorgesehen sein, dass der Rootschlüssel nicht nach außerhalb der Sicherheitseinheit weitergegeben wird. So ist eine weitere Erhöhung der Sicherheit denkbar, beispielsweise, indem zeitlich gültige Basisschlüssel aus dem Rootschlüssel abgeleitet werden und dergleichen.

Die Sicherheitseinheit kann als ein Ein-Chip-System mit der Recheneinheit und/oder der Schnittstelleneinheit oder als eigener Sicherheitschip ausgebildet sein. Konkret kann vorgesehen sein, dass die Sicherheitseinheit als vertrauenswürdige Zone des Ein-Chip-Systems oder als eingebettetes Sicherheitselement des Ein-Chip-Systems oder als Trusted Platform Module (TPM) ausgebildet ist. Auch bei Ein-Chip-Systemen (SoC) sind inzwischen Maßnahmen/Mechanismen bekannt, um einen Zugriff eines allgemeinen Betriebssystems, beispielsweise eines Betriebssystems der Recheneinheit und/oder der Schnittstelleneinheit, auf einen bestimmen Hardware-Teilabschnitt, insbesondere eine vertrauenswürdige Zone und/oder ein eingebettetes Sicherheitselement, zu verhindern. Beispielsweise sind Technologien bekannt, in denen übliche Nachrichten/Operationen in 32-Bit-Technologie übertragen werden, während in einem vertrauenswürdigen Hardware-Abschnitt des Ein-Chip-Systems ein 33. Bit mitverwendet wird, welches die sicheren Anteile kennzeichnet ("SecureBit"). Entsprechende Technologien können auch im Rahmen der vorliegenden Erfindung eingesetzt werden, um besonders kompakte Ausgestaltungen der Datenverarbeitungseinrichtung zu ermöglichen.

Mit besonderem Vorteil lassen sich die erfindungsgemäßen Neuerungen innerhalb eines Kraftfahrzeugs als Gesamtvorrichtung einsetzen, wobei bevorzugt vorgesehen sein kann, dass wenigstens eine Datenverarbeitungseinrichtung ein Steuergerät ist. In modernen Kraftfahrzeugen liegen meist komplizierte Datenverarbeitungssysteme vor, an die höchste Anforderungen gestellt werden, insbesondere an die beteiligten Steuergeräte. Dabei sei jedoch darauf hingewiesen, dass es sich bei den Datenverarbeitungseinrichtungen in einem Kraftfahrzeug als Gesamtvorrichtung nicht zwangsläufig um Steuergeräte handeln muss, sondern es durchaus denkbar ist, andere Datenverarbeitungseinrichtungen einzubinden, beispielsweise Sensoren, Anzeigeeinrichtungen, Bedienelemente, Brückeneinrichtungen und dergleichen.

Gerade bei Kraftfahrzeugen, aber auch bei Gesamtvorrichtungen allgemein, kann es zweckmäßig sein, wenn die Schlüsselinformationen gesamtvorrichtungsspezifisch sind, um die Sicherheit weiter zu erhöhen. Die Schlüsselinformationen können dann beispielsweise seitens eines Herstellers in einer Datenbank vorgehalten werden, um gezielt Erweiterungen und/oder Ersetzungen bezüglich der Datenverarbeitungssysteme der Gesamtvorrichtungen kontrollieren zu können.

Neben der Gesamtvorrichtung betrifft die vorliegende Erfindung auch ein Verfahren zur Authentifizierung einer ein Kommunikationsprotokoll nutzenden Kommunikationsverbindung zwischen zwei Datenverarbeitungseinrichtungen einer Gesamtvorrichtung der erfindungsgemäßen Art durch einen Verschlüsselungsmechanismus, wobei die Verschlüsselung der Nutzdaten in Abhängigkeit der Schlüsselinformation erfolgt. Sämtliche Ausführungen bezüglich der erfindungsgemäßen Gesamtvorrichtung lassen sich analog auf das erfindungsgemäße Verfahren übertragen, mit welchem mithin ebenso die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze einer erfindungsgemäßen Gesamtvorrichtung,
- Fig. 2: einen Ablaufplan eines Ausführungsbeispiels des erfindungsgemäßen Verfahrens,
- Fig. 3: eine Skizze zur teilweisen Verschlüsselung, und
- Fig. 4: ein erfindungsgemäßes Kraftfahrzeug als Gesamtvorrichtung.

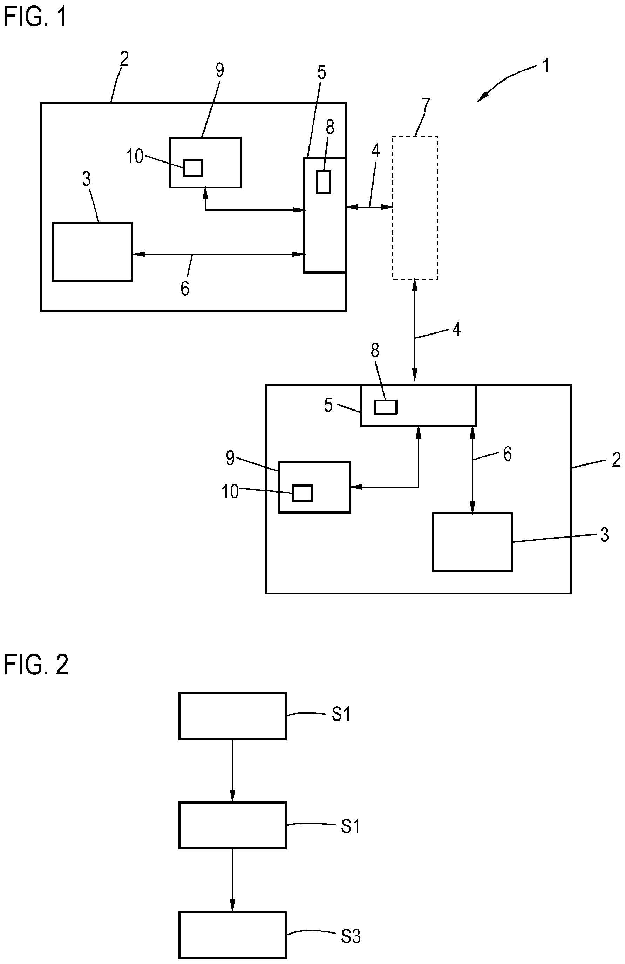

Fig. 1 zeigt ein Ausführungsbeispiel einer erfindungsgemäßen Gesamtvorrichtung 1. Diese weist vorliegend beispielhaft zwei gezeigte Datenverarbeitungseinrichtungen 2 auf, die jeweils eine Recheneinheit 3, beispielsweise eine CPU, aufweisen. Die Recheneinheit 3 kann beispielsweise ein Rich Execution Environment mit einem Betriebssystem bereitstellen, welches das Interrupts-Handling, Treiber, Anwendungen und dergleichen verwalten kann. Die Datenverarbeitungseinrichtungen 2 sollen über eine PCIe-Kommunikationsverbindung 4 miteinander kommunizieren können, weswegen sie beide jeweils eine Schnittstelleneinheit 5, die als PCIe-Mikrochip ausgebildet sein kann, aufweisen, die in einer Interrupt- und Nutzdatenverbindung 6 mit der Recheneinheit 3 steht, wie grundsätzlich bekannt. Dabei ist es nicht wesentlich, ob die Kommunikationsverbindung 4 direkt oder über eine hier nur angedeutete Brückeneinrichtung 7, die als Switch, Hub, Multiplexer-Demultiplexer oder dergleichen ausgebildet sein kann, läuft, wobei darauf hingewiesen sei, dass eine Brückeneinrichtung 7 selbst natürlich auch als Datenverarbeitungseinrichtung zählen und entsprechend den Datenverarbeitungseinrichtungen 2 ausgebildet sein kann, wobei dann eine Authentifizierung über Teilstücke der Kommunikationsverbindung 4 erfolgen kann, was jedoch weniger bevorzugt ist.

Als Teil einer Authentifizierungsanordnung ist hardwaremäßig in die Schnittstelleneinheit 5 jeweils ein Verschlüsselungs-/Entschlüsselungsmittel 8 integriert, welches vorliegend abhängig von einem ausgehandelten Sessionschlüssel für die Kommunikationssitzung Nutzdaten ver- bzw. entschlüsseln kann. Das Verschlüsselungs-/Entschlüsselungsmittel ist dabei der Transaktionsschicht (Transaction Layer) des PCIe-Kommunikationsprotokolls zuzuordnen. Das bedeutet die Verschlüsselung/Entschlüsselung wird auf die physikalisch zu transportierenden Daten (TLPs - Transaction Layer Packets) angewendet.

Das Aushandeln der Sessionschlüssel erfolgt über eine weitere Komponente der Authentifizierungsanordnung, nämlich eine Sicherheitseinheit 9, die vorliegend als eigener Mikrochip vorgesehen ist, konkret als Trusted Platform Modul (TPM), jedoch auch als vertrauenswürdige Zone oder Sicherheitselement auf einem die Recheneinheit 3 und/oder die Schnittstelleneinheit 5 realisierenden Mikrochip vorgesehen sein kann. Wesentlich ist, dass sowohl das Betriebssystem der Sicherheitseinheit 9 als auch eine in der Sicherheitseinheit 9 abgelegte Schlüsselinformation 10, vorliegend umfassend wenigstens einen für beide Datenverarbeitungseinrichtungen 2 gleichen Basisschlüssel, hardwarecodiert, mithin unveränderlich, sind. Die Sicherheitseinheit 9 bildet somit eine vertrauenswürdige Laufzeitumgebung, mithin eine sogenannte Trusted Execution Environment (TEE), auf die insbesondere die jeweilige Recheneinheit 3 keinerlei steuernden oder beeinflussenden Zugriff hat. Das vertrauenswürdige Betriebssystem der Sicherheitseinheit 9 führt alle sicherheitsrelevanten Berechnungen durch, vorliegend also insbesondere das Verwalten der Schlüsselinformation 10 als auch das Aushandeln eines Sessionschlüssels, der dann basierend auf der Schlüsselinformation 10 als "shared information" ermittelt wird, so dass eine verschlüsselte Kommunikation zwischen den Datenverarbeitungseinrichtungen 2 nur bei übereinstimmender bzw. aufeinander abgestimmter Schlüsselinformation 10 möglich ist, was eine Authentifizierung darstellt. Ist eine Verschlüsselung möglich, wissen mithin beide der Datenverarbeitungseinrichtungen 2, dass der jeweilige Kommunikationspartner autorisiert ist, so dass eine gegenseitige Authentifizierung gegeben ist. Hinzugefügte und/oder veränderte Datenverarbeitungseinrichtungen, die die Schlüsselinformation 10 nicht aufweisen, können so entdeckt und als nicht zulässiges Gerät festgestellt werden. Es ist auch denkbar, einen von der Schlüsselaushandlung getrennten Authentifizierungsvorgang vorzusehen, beispielsweise der Schlüsselaufhandlung vorgeschaltet als Voraussetzung für diese. Dann muss nicht zwangsläufig die Schlüsselinformation in den Sessionschlüssel oder dessen Aushandlung eingehen.

Es sei noch angemerkt, nachdem vorliegend eine symmetrische Basisverschlüsselung gegeben ist, dass auch mehrere Basisschlüssel verwendet werden können, die insbesondere von einem Rootkey abgeleitet sein können, der die Sicherheitseinheit 9 niemals verlässt. Auf diese Weise können unterschiedliche Basisschlüssel für unterschiedliche Modelle der Gesamtvorrichtung 1, unterschiedliche Staaten und/oder Regionen und/oder unterschiedliche Zeiträume geschaffen werden, um die Sicherheit weiter zu erhöhen. Es ist ferner bevorzugt, wenn der (insbesondere als Rootkey dienende) Basisschlüssel der Schlüsselinformation 10 gesamtvorrichtungsindividuell ist, mithin für jede Gesamtvorrichtung 1 ein eigener, individueller Rootkey und somit eine eigene, individuelle Schlüsselinformation 10 vorhanden ist.

Es ist sei noch angemerkt, dass die jeweiligen Sicherheitseinheiten 9 wenigstens einen Absicherungsmechanismus aufweisen, der es zumindest erschwert, durch Manipulation an der Sicherheitseinheit 9 selber an die Schlüsselinformation 10 zu gelangen.

Fig. 2 zeigt einen Ablaufplan eines Ausführungsbeispiels des erfindungsgemäßen Verfahrens, wie es in der Gesamtvorrichtung 1 durchgeführt werden kann. In einem Schritt S1 können beispielsweise beide Datenverarbeitungseinrichtungen 2 initialisiert, beispielsweise hochgefahren, werden, woraufhin auch sowohl die Recheneinheit 3 als auch die Sicherheitseinheit 9 starten. Dies wird auch als Beginn einer Kommunikationssitzung angesehen, so dass in einem Schritt S2 die Sicherheitseinheiten 9 über die Kommunikationsverbindung 4 miteinander einen Sessionschlüssel für die Kommunikationssitzung aushandeln, wobei auch hier bereits eine Verschlüsselung unter Nutzung der Schlüsselinformation 10 und des jeweiligen Verschlüsselungs-/Entschlüsselungsmittels 8 stattfinden kann. In jedem Fall wird der Sessionschlüssel unter Verwendung der Schlüsselinformation 10 ausgehandelt bzw. aus dieser abgeleitet.

In diesem Sinn kann der Schritt S2 auch als ein Authentifizierungsvorgang verstanden werden, denn entweder bereits die Aushandlung des Sessionschlüssels oder aber später die Kommunikation mit verschlüsselten Daten wird fehlschlagen und somit klar anzeigen, dass der Kommunikationspartner nicht korrekt authentifiziert ist.

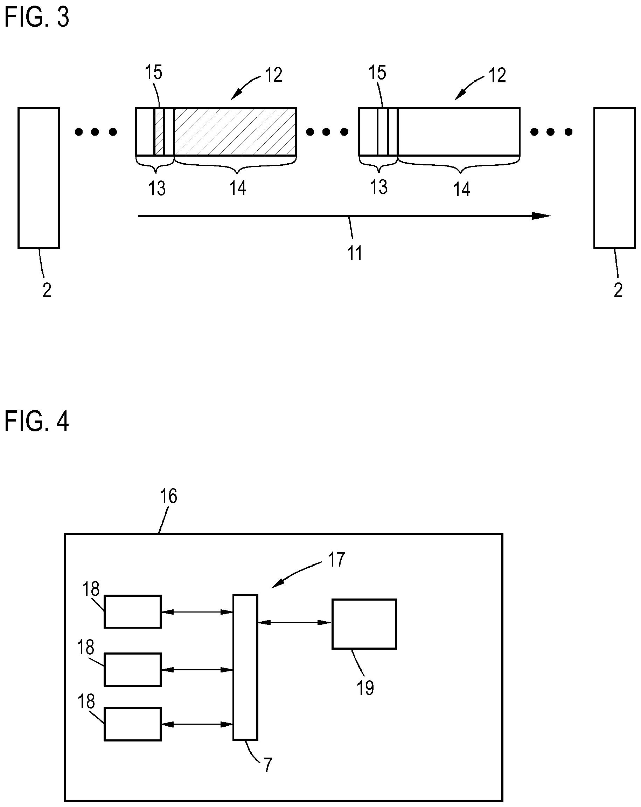

In einem Schritt S3 kann der Sessionschlüssel dann genutzt werden, um verschlüsselt zu kommunizieren. Dabei ist es nicht zwangsläufig nötig, jedes Nutzdatenpaket, hier konkret TLP, zu verschlüsseln, sondern es ist auch eine partielle Verschlüsselung denkbar, wie durch Fig. 3 näher erläutert werden soll. Angedeutet ist dort der Datentransport 11 zwischen den Datenverarbeitungseinrichtungen 2, wobei zwei unterschiedliche Nutzdatenpakete 12 (TLPs) gezeigt sind. Jedes der Nutzdatenpakete 12 umfasst dabei wenigstens einen Header 13 und Nutzdaten 14 (Payload). Im Header 13 befindet sich nun jeweils eine Informationseinheit 15, beispielsweise ein Verschlüsselungsbit bzw. Encryption-Bit, welches dann, wenn es gesetzt ist, anzeigt, dass die Nutzdaten 14 verschlüsselt sind (vgl. Schraffuren im linken Nutzdatenpaket 12), und, wenn es nicht gesetzt ist, anzeigt, dass die Nutzdaten 14 nicht verschlüsselt sind, vgl. das rechte Nutzdatenpaket 12 und die entsprechend fehlenden Schraffuren.

Die Rate der Nutzdatenpakete 12, die verschlüsselte Nutzdaten 14 enthalten, kann dabei auch dynamisch angepasst werden, beispielsweise in Abhängigkeit einer gewollten Datenübertragungsgeschwindigkeit.

Fig. 4 zeigt schließlich schematisch ein Kraftfahrzeug 16 als Gesamtvorrichtung 1. Das Kraftfahrzeug 16 weist ein Datenverarbeitungssystem 17 auf, dem mehrere Steuergeräte 18 als Datenverarbeitungseinrichtungen 2 sowie weitere Komponenten 19 als Datenverarbeitungseinrichtungen 2, beispielsweise Sensoren und Anzeigevorrichtungen, angehören. Es kann wenigstens eine Brückeneinrichtung 7, die beispielsweise als Mulitplexer-Demultiplexer wirken kann, vorgesehen sein.

## Patentansprüche

1. Gesamtvorrichtung (1) mit einer Authentifizierungsanordnung für eine ein Kommunikationsprotokoll nutzende Kommunikationsverbindung (4) zwischen zwei Datenverarbeitungseinrichtungen (2) der Gesamtvorrichtung (1), wobei die Datenverarbeitungseinrichtungen (2) jeweils eine Schnittstelleneinheit (5) für die Kommunikationsverbindung (4) und eine Recheneinheit (3) aufweisen,
**dadurch gekennzeichnet,**
**dass** die Schnittstelleneinheiten (5) jeweils ein wenigstens teilweise durch Hardware realisiertes Verschlüsselungs-/Entschlüsselungsmittel (8) zur Verschlüsselung wenigstens eines Teils der über die Kommunikationsverbindung (4) zu übertragenden Nutzdaten (14) als Teil der Authentifizierungsanordnung aufweisen, welches in einer Kommunikationsschicht des Kommunikationsprotokolls auf die für die physikalische Nutzdatenübertragung vorbereiteten Nutzdaten (14) bzw. die physikalisch empfangenen Nutzdaten (14) angewendet wird, wobei jede Datenverarbeitungseinrichtung (2) eine als eigene Hardware, auf die die Recheneinheit (3) nicht zugreifen kann, und/oder logisch isoliert von der Recheneinheit umgesetzte, eine Trusted Execution Environment realisierende Sicherheitseinheit (9) der Authentifizierungsanordnung mit jeweils wenigstens einer hardwarecodierten Schlüsselinformation (10) aufweist, in deren Abhängigkeit die Nutzdaten (14) durch das Verschlüsselungs-/Entschlüsselungsmittel (8) verschlüsselt werden.

2. Gesamtvorrichtung (1) nach Anspruch 1,
**dadurch gekennzeichnet,**
**dass** die Kommunikationsschicht eine Transportschicht und/oder eine Transaktionsschicht ist und/oder das Kommunikationsprotokoll paketbasiert, insbesondere PCI Express, ist.

3. Gesamtvorrichtung (1) nach Anspruch 1 oder 2,
**dadurch gekennzeichnet,**
**dass** bei einem paketbasierten Kommunikationsprotokoll nur ein, insbesondere dynamisch und/oder benutzerseitig einstellbarer, Anteil der zu versendenden Nutzdatenpakete (12) verschlüsselt wird, wobei der Verschlüsselungszustand in einer Informationseinheit (15), insbesondere einem Verschlüsselungsbit, des Headers (13) des jeweiligen Nutzdatenpakets (12) angezeigt wird.

4. Gesamtvorrichtung (1) nach einem der vorangehenden Ansprüche,
**dadurch gekennzeichnet,**
**dass** die Sicherheitseinheit (9) wenigstens einen Absicherungsmechanismus gegen ein Aus- oder Ablesen der Schlüsselinformation (10) aufweist.

5. Gesamtvorrichtung (1) nach einem der vorangehenden Ansprüche,
**dadurch gekennzeichnet,**
**dass** die Authentifizierungsanordnung zum Aushandeln eines für eine Kommunikationssitzung zu verwendenden Sessionschlüssels in Abhängigkeit der Schlüsselinformation (10) ausgebildet ist.

6. Gesamtvorrichtung (1) nach einem der vorangehenden Ansprüche,
**dadurch gekennzeichnet,**
**dass** bei einer symmetrischen Schlüsselinformation (10), die für jede Datenverarbeitungseinrichtung (2) wenigstens einen gleichen Basisschlüssel umfasst, mehrere Basisschlüssel vorgesehen sind und/oder die Sicherheitseinheit (9) zur Ableitung verschiedener Subschlüssel aus dem Basisschlüssel ausgebildet ist.

7. Gesamtvorrichtung (1) nach Anspruch 6,
**dadurch gekennzeichnet,**
**dass** ein zu verwendender Schlüssel anhand einer Eigenschaft der Gesamtvorrichtung (1) und/oder eines den Einsatz der Gesamtvorrichtung (1) beschreibenden Einsatzparameters wählbar ist.

8. Gesamtvorrichtung (1) nach einem der vorangehenden Ansprüche,
**dadurch gekennzeichnet,**
**dass** die Sicherheitseinheit (9) als Ein-Chip-System mit der Recheneinheit (3) und/oder der Schnittstelleneinheit (5) oder als eigener Sicherheitschip ausgebildet ist.

9. Gesamtvorrichtung (1) nach Anspruch 8,
**dadurch gekennzeichnet,**
**dass** die Sicherheitseinheit (9) als vertrauenswürdige Zone des Ein-Chip-Systems oder als eingebettetes Sicherheitselement des Ein-Chip-Systems oder als Trusted Platform Module ausgebildet ist.

10. Gesamtvorrichtung (1) nach einem der vorangehenden Ansprüche,
**dadurch gekennzeichnet,**
**dass** sie ein Kraftfahrzeug (16) ist.

11. Gesamtvorrichtung (1) nach Anspruch 10,
**dadurch gekennzeichnet,**
**dass** wenigstens eine Datenverarbeitungseinrichtung (2) ein Steuergerät (18) ist.

12. Verfahren zur impliziten Authentifizierung einer ein Kommunikationsprotokoll nutzenden Kommunikationsverbindung (4) zwischen zwei Datenverarbeitungseinrichtungen (2) einer Gesamtvorrichtung (1) nach einem der vorangehenden Ansprüche durch einen Verschlüsselungsmechanismus, wobei die Verschlüsselung der Nutzdaten (14) in Abhängigkeit der Schlüsselinformation (10) erfolgt.

## Claims

1. Complete device (1) having an authentication arrangement for a communication link (4), using a communication protocol, between two data processing devices (2) of the complete device (1), wherein the data processing devices (2) each have an interface unit (5) for the communication link (4) and a computing unit (3),
**characterised in**
**that** the interface units (5) each have an encryption/decryption means (8), at least partially created by hardware, for encrypting at least some of the user data (14) to be transmitted via the communication link (4) as part of the authentication arrangement, which is applied in a communication layer of the communication protocol to the user data (14) prepared for the physical user data transfer or to the physically received user data (14), wherein each data processing device (2) has a security unit (9) implemented as embedded hardware, which the computing unit (3) cannot access, and/or in a manner logically isolated from the computing unit, producing a trusted execution environment for the authentication arrangement with, in each case, at least one piece of hardware-encoded key information (10), on the basis of which the user data (14) is encrypted by the encryption/decryption means (8).

2. Complete device (1)according to claim 1,
**characterised in**
**that** the communication layer is a transport layer and/or a transaction layer and/or the communication protocol is packet-based, in particular PCI Express.

3. Complete device (1) according to claim 1 or 2,
**characterised in**
**that**, in the case of a packet-based communication protocol, only one part of the user data packet (12) to be sent, in particular that can be selected dynamically and/or by the user, is encrypted, wherein the encryption state is displayed in an information unit (15), in particular an encryption bit, of the header (13) of the particular user data packet (12).

4. Complete device (1) according to any of the preceding claims,
**characterised in**
**that** the security unit (9) has at least one security mechanism to protect the key information (10) from being read.

5. Complete device (1) according to any of the preceding claims,
**characterised in**
**that** the authentication arrangement is designed to negotiate a session key to be used for a communication session based on the key information (10).

6. Complete device (1) according to any of the preceding claims,
**characterised in**
**that**, in the case of symmetrical key information (10), which comprises at least a same basic key for each data processing device (2), several basic keys are provided and/or the security unit (9) for deriving different sub-keys is formed from the basic key.

7. Complete device (1) according to claim 6,
**characterised in**
**that** a key to be used can be selected using a property of the complete device (1) and/or an operating parameter describing the operation of the complete device (1).

8. Complete device (1) according to any of the preceding claims,
**characterised in**
**that** the security unit (9) is designed as a system on chip with the computing unit (3) and/or the interface unit (5) or as an embedded security chip.

9. Complete device (1) according to claim 8,
**characterised in**
**that** the security unit (9) is designed as a trusted zone of the system on chip or as an embedded security element of the system on chip or as a trusted platform module.

10. Complete device (1) according to any of the preceding claims,
**characterised in**
**that** it is a motor vehicle (16).

11. Complete device (1)according to claim 10,
**characterised in**
**that** at least one data processing device (2) is a control unit (18).

12. Method for the implicit authentication of a communication link (4), using a communication protocol, between two data processing devices (2) of a complete device (1) according to any of the preceding claims, by an encryption mechanism, wherein encryption of the user data (14) takes place on the basis of the key information (10).

## Revendications

1. Dispositif global (1) avec un agencement d'authentification pour une liaison de communication (4) utilisant un protocole de communication entre deux dispositifs de traitement de données (2) du dispositif global (1), dans lequel les dispositifs de traitement de données (2) présentent respectivement une unité d'interface (5) pour la liaison de communication (4) et une unité de calcul (3),
**caractérisé en ce que**
les unités d'interface (5) présentent respectivement un moyen de cryptage/décryptage (8) réalisé au moins partiellement par du matériel pour le cryptage d'au moins une partie des données utiles (14) à transmettre par le biais de la liaison de communication (4) en tant que partie de l'agencement d'authentification, qui est employé dans une couche de communication du protocole de communication sur les données utiles (14) préparées pour la transmission physique de données utiles ou sur les données utiles (14) reçues physiquement, dans lequel chaque dispositif de traitement de données (2) présente une unité de sécurité (9) de l'agencement d'authentification concrétisée en tant que propre matériel auquel l'unité de calcul (3) ne peut pas accéder, et/ou logiquement isolée de l'unité de calcul, réalisant un Environnement d'Exécution de Confiance avec respectivement au moins une information de clé (10) codée par le matériel, en fonction de laquelle les données utiles (14) sont cryptées par le moyen de cryptage/décryptage (8).

2. Dispositif global (1) selon la revendication 1,
**caractérisé en ce que**
la couche de communication est une couche de transport et/ou une couche de transaction et/ou le protocole de communication est à base de paquet, en particulier PCI Express.

3. Dispositif global (1) selon la revendication 1 ou 2,
**caractérisé en ce que**
dans le cas d'un protocole de communication à base de paquet, seule une portion des paquets de données utiles (12) à envoyer, en particulier pouvant être ajustée dynamiquement et/ou en fonction de l'utilisateur est cryptée, dans lequel l'accès au cryptage est indiqué dans une unité d'information (15), en particulier un bit de cryptage, de l'en-tête (13) du paquet de données utiles respectives (12).

4. Dispositif global (1) selon l'une quelconque des revendications précédentes,
**caractérisé en ce que**
l'unité de sécurité (9) présente au moins un mécanisme d'assurance contre une extraction ou une lecture de l'information de clé (10).

5. Dispositif global (1) selon l'une quelconque des revendications précédentes,
**caractérisé en ce que**
l'agencement d'authentification est conçu pour négocier une clé de session à utiliser pour une session de communication en fonction de l'information de clé (10).

6. Dispositif global (1) selon l'une quelconque des revendications précédentes,
**caractérisé en ce que**
dans le cas d'une information de clé symétrique (10) qui comprend pour chaque dispositif de traitement de données (2) au moins une même clé de base, plusieurs clés de base sont prévues et/ou l'unité de sécurité (9) est conçue pour dériver différentes sous-clés à partir de la clé de base.

7. Dispositif global (1) selon la revendication 6,
**caractérisé en ce que**
une clé à utiliser peut être choisie sur la base d'une propriété du dispositif global (1) et/ou d'un paramètre d'utilisation décrivant l'utilisation du dispositif global (1).

8. Dispositif global (1) selon l'une quelconque des revendications précédentes,
**caractérisé en ce que**
l'unité de sécurité (9) est conçue comme un système sur puce (One-Chip-System) avec l'unité de calcul (3) et/ou l'unité d'interface (5) ou en tant que propre puce de sécurité.

9. Dispositif global (1) selon la revendication 8,
**caractérisé en ce que**
l'unité de sécurité (9) est conçue comme une zone du système sur puce fiable ou comme un élément de sécurité intégré du système sur puce ou comme une puce TPM.

10. Dispositif global (1) selon l'une quelconque des revendications précédentes,
**caractérisé en ce**
**qu'**il est un véhicule automobile (16).

11. Dispositif global (1) selon la revendication 10,
**caractérisé en ce que**
l'au moins un dispositif de traitement de données (2) est un appareil de commande (18).

12. Procédé pour l'authentification implicite d'une liaison de communication (4) à utiliser dans un protocole de communication entre deux dispositifs de traitement de données (2) d'un dispositif global (1) selon l'une quelconque des revendications précédentes par un mécanisme de cryptage, dans lequel le cryptage des données utiles (14) s'effectue en fonction de l'information de clé (10).
